# EUROPÄISCHE PATENTANMELDUNG

(11) **EP 1 001 141 A2**
(43) Veröffentlichungstag der Anmeldung: **17.05.2000**
(21) Anmeldenummer: 99890345.4
(22) Anmeldetag: 28.10.1999
(51) Int. Cl.: F01L 1/34, F02D 13/02

(54) **Verfahren zum Betreiben einer fremdgezündeten Viertakt-Brennkraftmaschine**

(30) Priorität: 09.11.1998 AT 73498 U
(71) Anmelder: AVL List GmbH, 8020 Graz (AT)
(72) Erfinder: Mayerhofer, Ulrich, Dipl.-Ing., 8502 Lannach (AT); Kapus, Paul, Dr., 8045 Graz (AT)
(74) Vertreter: Babeluk, Michael, Dipl.-Ing. Mag.

(57) **Zusammenfassung**

Die Erfindung betrifft ein Verfahren zum Betreiben einer fremdgezündeten Viertakt-Brennkraftmaschine mit zumindest einem Einlaßventil und zumindest einem Auslaßventil pro Zylinder, wobei Ein- und Auslaßventile über eine gemeinsame Nockenwelle betätigt werden.

Um mit möglichst geringem Aufwand bei einer fremdgezündeten Brennkraftmaschine einen weitgehend ungedrosselten Betrieb mit geringen Ladungswechselverlusten und günstigem Kraftstoffverbrauch zu erzielen, ist vorgesehen, daß bei Teillast durch eine Phasenverstellung der Nockenwelle sowohl die Einlaßsteuerzeit als auch die Auslaßsteuerzeit um einen Kurbelwellen-Winkel von etwa 30° bis 100°, vorzugsweise etwa 40° bis 80°, nach Spät verschoben wird.

## Beschreibung

Die Erfindung betrifft ein Verfahren zum Betreiben einer fremdgezündeten Viertakt-Brennkraftmaschine mit zumindest einem Einlaßventil und zumindest einem Auslaßventil pro Zylinder, wobei Ein- und Auslaßventile über eine gemeinsame Nockenwelle betätigt werden.

Ständig steigende Anforderungen an den Kraftstoffverbrauch und die Reduktion der Abgasemissionen, insbesondere der Kohlenwasserstoffe und der Stickoxide, erfordern den Einsatz neuer Technologien im Bereich der Verbrennungskraftmaschinen.

Ein wesentlicher Grund für den gegenüber zum Beispiel Dieselmotoren höheren spezifischen Kraftstoffverbrauch einer fremdgezündeten Brennkraftmaschine liegt in der Betriebsweise mit vorgemischtem homogenem Kraftstoff-Luftgemisch. Dies bedingt eine Regelung der Motorlast mit Hilfe eines Drosselorganes zur Begrenzung der insgesamt angesaugten Gemischmenge (Quantitätsregelung).

Diese Drosselung der Ansaugströmung führt zu einem thermodynamischen Verlust, der den Kraftstoffverbrauch der Verbrennungskraftmaschine erhöht. Das Potential zur Verbrauchsreduzierung der Verbrennungskraftmaschine bei Umgehung dieser Drosselung kann auf etwa 25% geschätzt werden. Ein Teil dieses Verbesserungspotentials kann genutzt werden, wenn im Teillastbereich eine Verringerung der Drosselung möglich wird.

Folgende Möglichkeiten zur Verringerung der Drosselverluste bei Ottomotoren sind bekannt:
*A) Magerbetrieb*
   a) homogen
   b) geschichtet (Zündkerze fett, Zylinderwand mager)
*B) Abgasrückführung*
*C) Frühes Schließen des Einlaßventiles (variabler Ventilhub)*
*D) Spätes Schließen des Einlaßventiles ("Miller-Cycle")*
Im Folgenden werden diese Verfahren bzw. deren Vor- und Nachteile beschrieben:
*A) Magerbetrieb:*
   a) homogen: bei gegebener Kraftstoffmenge ist eine Entdrosselung durch Erhöhung der Luftmenge (Abmagerung des Gemisches) möglich. Nun wird aber durch Abmagerung die Verbrennung verlangsamt, was zu einem niedrigeren thermodynamischen Wirkungsgrad führt. Um die Entdrosselung zu erhöhen sind also Maßnahmen erforderlich, die die Abmagerungsfähigkeit verbessern. Für die Einhaltung der Emissionsgrenzwerte ist für diesen Betrieb eine spezielle Abgasnachbehandlung für Stickoxide (DENOX-Katalysator) nötig.
   b) geschichtet: der Verlangsamung der Verbrennung kann auch durch Schichtung des Gemisches im Brennraum entgegengewirkt werden. Dabei wird versucht, in der Umgebung der Zündkerze zum Zeitpunkt der Entflammung ein fetteres Gemisch als im restlichen Brennraum zu erzielen. Bei Einspritzung ins Saugrohr ist es wegen des homogenisierenden Effektes der Ladungsbewegung nicht möglich, eine nennenswerte Schichtung zum Zündzeitpunkt aufrechtzuerhalten. Bei direkter Einspritzung des Kraftstoffes in den Brennraum kann bei Einspritzung kurz vor der Entflammung eine stabile, reproduzierbare Schichtung und damit ein ungedrosselter Betrieb erzielt werden. Auch bei diesem Verfahren muß zur Einhaltung der Emissionsgrenzwerte im Fahrzeug ein DENOX-Kat verwendet werden. Zusätzlich muß bei der kurzen zur Verfügung stehenden Zeit zur Gemischbildung besonderes Augenmerk auf Rußbildung bzw. deren Vermeidung geachtet werden. Der technische Aufwand zur Realisierung einer direkten Einspritzung ist deutlich höher als bei einer Saugrohreinspritzung.
*B) Abgasrückführung (AGR):*
   Durch Rückführung von inertem Abgas ist ebenfalls, so wie beim Magerbetrieb, eine Entdrosselung möglich. Da das rückgeführte Abgas das Luft- Kraftstoffverhältnis nicht ändert, ist ein stöchiometrischer Betrieb und damit eine konventionelle Abgasnachbehandlung mit Dreiwegekatalysator möglich. Auch bei AGR-Zugabe verlangsamt sich die Verbrennung deutlich. Es treten die gleichen thermodynamischen Verluste wie bei Magerbetrieb auf. Durch selektive Zugabe des Abgases in der Nähe der Zylinderwand ist eine zusätzliche leichte Schichtung von Frischgas in der Nähe der Zylindermitte und Abgas an der Zylinderwand möglich. Eine Brennkraftmaschine mit mindestens zwei Einlaßventilen bietet die Möglichkeit, dem Brennraum über getrennte Einlaßkanäle unterschiedliche Gemischzusammensetzungen zuzuführen. Die Strömung im Zylinderraum kann mit Hilfe der Gestaltung der Einlaßorgane des Motors derart beeinflußt werden, daß sich zum Zündzeitpunkt ein in der gewünschten Weise geschichtetes Gemisch im Zylinder befindet. Hierbei ist es besonders vorteilhaft, wenn sich der fettere (bei Luftzufuhr) bzw. der reinere (Bei AGR) Gemischanteil in Zylindermitte im Bereich einer zentral angeordneten Zündkerze befindet, während zur Zylinderwand hin eine Abmagerung des Gemisches bzw. eine Zunahme der Abgaskonzentration vorzufinden ist.
*C) Frühes Schließen des Einlaßventiles:*
   Durch Verwendung eines vollvariablen Ventilhubes ist es möglich, das Einlaßventil bei ungeändertem Öffnungszeitpunkt deutlich früher zu schließen. Dadurch saugt der Motor nur so viel Luft (gegen geringeren Unterdruck) an, wie er für stöchiometrische Verbrennung benötigt. Die Drosselverluste sinken deutlich. Die Nachteile dieses Verfahrens sind der hohe technische Aufwand für die Realisierung des vollvariablen Ventilhubes und die Abkühlung des Kraftstoffes bei Expansion gegen das geschlossene Einlaßventil. Da das Einlaßventil sehr früh zumacht, ergeben sich bei der Abwärtsbewegung des Kolbens Ladungstemperaturen unter dem Gefrierpunkt.
*D) Spätes Schließen des Einlaßventiles:*
   Eine weitere Alternative zur Entdrosselung ist das Ausschieben von gegen geringem Unterdruck zuviel angesaugter Luft. Dies geschieht durch sehr spätes Schließen des Einlaßventiles, wenn der Kolben schon deutlich nach oben geht (Kompression). Diese bekannte Variante des sogenannten "Miller-Cycle" wird üblicherweise bei Motoren mit zwei oben liegenden Nockenwellen (DOHC-Motoren) und zwei, im wesentlichen symmetrisch angeordneten Einlaßkanälen pro Zylinder, verwendet. Durch die bei konventionellen Motoren mit symmetrischen Einlaßkanälen erzeugte "Tumble"-Ladungsbewegung kommt es allerdings dazu, daß bei extrem spätem Schließen des Einlaßventiles auch Kraftstoff, der vor oder während der Ansaugphase eingespritzt wird, wieder ausgeschoben wird. Durch die "Tumble"-Ladungsbewegung wird eine Gemischwalze 90° zur Zylinderachse aufgebaut. Es bildet sich eine Aufwärtsströmung auf der Rückseite des Zylinders in Richtung Einlaßventil. Dadurch kommt es zur Zylindermißverteilung bzw. zu nicht reproduzierbarer Gemischzusammensetzung.

Es sind zahlreiche Brennkraftmaschinen mit externer oder interner Abgasrückführung bekannt. Es sind auch Brennkraftmaschinen bekannt, bei denen der Einlaßschluß verändert bzw. nach spät verstellt wird.

Aus der EP 0 764 773 A2 ist eine Brennkraftmaschine bekannt, bei der die Abgasrückführung in den Einlaßsammler erfolgt. Dies hat allerdings den Nachteil, daß durch den Einlaßsammler ein relativ großes Totvolumen gebildet wird. Durch die dämpfende Wirkung des Totvolumens ist die Reaktionszeit des Abgasrückführsystems relativ langsam, wodurch nur relativ niedrige Abgasrückführraten im dynamischen Fahrbetrieb aus Fahrbarkeitsgründen möglich sind.

Andererseits ist aus der EP 0 764 773 A2 ein weiteres Abgasrückführsystem bekannt, bei dem die Abgasrückführung aus dem Auslaßsystem direkt in einen von zwei Einlaßkanälen pro Zylinder erfolgt. Bei dieser Ausführung können zwar große Totvolumina vermieden werden, allerdings ist eine gleichmäßige Rückführung des Abgases zu den einzelnen Zylindern nicht mehr gewährleistet.

Aus der AT 2 434 U1 ist eine fremdgezündete Brennkraftmaschine mit mehreren Zylindern und einer Einrichtung zur Ladungsverdünnung für Luft oder rückgeführtes Abgas bekannt, welche eine für alle Zylinder eine Reihe gemeinsame Verteilerleiste aufweist, in welche die Zuführleitung einmündet und welche über zumindest einen Verteilerkanal pro Zylinder mit einem Einlaßkanal strömungsverbunden ist. Dadurch wird eine für alle Zylinder gleiche und hohe Ladungsverdünnung ermöglicht, wobei bei Abgasrückführung die Gasdynamik des rückgeführten Abgases nur unwesentlich gedämpft wird. Die Brennkraftmaschine weist dabei pro Zylinder einen Tangentialkanal zur Erzeugung einer Rotation der Zylinderladung um die Zylinderachse und einen Neutralkanal, welcher weder eine ausgeprägte Drallströmung noch eine Tumbleströmung hervorruft. Derartige Brennkraftmaschinen tolerieren hohe Abgasrückführmengen.

Auch aus der AT 402 535 B ist eine Brennkraftmaschine mit einem Neutralkanal und einem Tangentialkanal pro Zylinder bekannt, wobei Kraftstoff in beide Einlaßkanäle über eine zwischen den Einlaßkanälen angeordnete Einspritzeinrichtung eingebracht wird. Die beiden Einlaßkanäle münden dabei in vordefinierten Winkeln in den Brennraum, so daß einerseits bei Teillast ein hoher Drall der Ladung erreicht wird ohne bei Vollast die Ladungseinströmung infolge schlechterer Durchflußwerte zu beeinträchtigen.

Die EP 0 764 773 A1 offenbart eine ähnliche Brennkraftmaschine mit jeweils in einen Zylinder mündenden Neutral- und Tangentialkanälen, wobei die Kraftstoffeinspritzung in den durch eine Drosseleinrichtung steuerbaren Neutralkanal erfolgt. Die Drosseleinrichtung ermöglicht im geschlossenen Zustand einen definierten Mindestdurchfluß. Mit dieser Ausbildung kann eine stabile radiale Gemischschichtung erreicht werden. Weiters wird in der EP 0 764 773 A1 eine externe Abgasrückführung zwischen Auslaßkanal und dem Tangentialkanal gezeigt.

Zur Erzielung einer internen Abgasrückführung sind verschiedene Verfahren bekannt. Die DE 1 222 735 B beschreibt eine Brennkraftmaschine, bei der der Öffnungszeitpunkt des Einlaßventiles weit in die Auslaßperiode verschoben wird.

Die DE 1 401 228 B zeigt einen Dieselmotor, bei dem Verbrennungsgase in das Ansaugsystem durch Veränderung der Steuerzeit der Auslaß- und Einlaßventile strömen.

Bei der DE 27 10 189 A1 wird eine interne Abgasrückführung durch verzögertes Schließen des Auslaßventiles mittels Lagerbockhöhenverstellung des Kipphebellagers erreicht.

Die DE 21 25 368 A zeigt einen Viertaktmotor, bei dem das Auslaßventil während des Ansaugtaktes kurz vor dem maximalen Einlaßventilhub mittels eines Zusatznockens geöffnet wird.

Die DE 26 38 651 A offenbart eine Brennkraftmaschine, bei der das Auslaßventil vor dem Schließen des Ansaugventiles und bei Stellung des Kolbens kurz vor Erreichen des unteren Totpunktes nochmals durch einen Zusatznocken geöffnet wird.

Aufgabe der Erfindung ist es, die genannten Nachteile zu vermeiden und ein Verfahren zu entwickeln, mit welchem bei einer fremdgezündeten Brennkraftmaschine ein drossel armer Teillastbetrieb auf möglichst einfache Weise erzielt werden kann.

Erfindungsgemäß wird dies dadurch erreicht, daß bei Teillast durch eine Phasenverstellung der Nockenwelle sowohl die Einlaßsteuerzeit als auch die Auslaßsteuerzeit um einen Kurbelwellen-Winkel von etwa 30° bis 100°, vorzugsweise etwa 40° bis 80°, nach Spät verschoben wird. Da Einlaß- und Auslaßsteuerzeit synchron nach Spät verschoben werden, wird vermeiden, daß sich in der frühen Ansaugphase nahe dem oberen Totpunkt ein Ladungswechselverluste bewirkender Unterdruck einstellt, wenn die Einlaßsteuerzeit nach Spät verstellt wird. Gleichzeitig läßt sich durch das verspätete Schließen der Auslaßventile eine interne Abgasrückführung in den Zylinderraum erzielen.

Besonders günstig ist es, wenn bei Spätverstellung der Einlaßsteuerzeit der Einlaßschluß bei etwa 80° bis 150°, vorzugsweise bei etwa 90° bis 140° nach dem auf dem Ladungswechsel folgenden unteren Totpunkt erfolgt.

Es ist von DOHC-Motoren bekannt, daß mit verspätetem Einlaßschluß ein entdrosselter Betrieb erreicht werden kann ("Miller-Cycle"). Dabei besteht allerdings die Gefahr, daß durch den verspäteten Schließpunkt der Einlaßventile ein Teil des Kraftstoffes wieder in das Ansaugrohr geschoben wird. Dieses Problem tritt vor allem bei tumbleerzeugenden Einlaßkanälen, insbesondere mit zwei symmetrisch angeordneten Einlaßkanälen pro Zylinder, auf. Durch eine asymmetrische Einlaßkanalanordnung, welche eine asymmetrische Einlaßströmung generiert, kann dieser Nachteil vermieden werden.

Die Steuerzeitverstellung erfolgt im Rahmen der vorliegenden Erfindung durch Verdrehen und/oder Verschieben der für Einlaß- und Auslaßventile gemeinsamen Nockenwelle, beispielsweise pneumatisch, hydraulisch, elektrisch oder mechanisch. Gegenüber einem vollvariablen Ventilhub, beispielsweise mittels elektrischer oder hydraulischer Ventilbetätigung, mit welchem ebenfalls ein drosselfreier Teillastbetrieb möglich wäre, hat die gemeinsame Steuerzeitverstellung für Ein- und Auslaßventile durch einfaches Verdrehen oder Verschieben der Nockenwelle ("cam shifting") den Vorteil eines äußerst geringen Herstellungs- und Steueraufwandes. Auch im Vergleich zur Steuerzeitspätverstellung bei DOHC-Motoren hat das erfindungsgemäße Verfahren den Vorteil, daß eine Verbrauchsverbesserung mit viel geringerem Aufwand verwirklicht werden kann.

Durch das erfindungsgemäße Verfahren läßt sich somit eine deutliche Kraftstoffersparnis erzielen. Der späte Auslaßschluß am Beginn des Ansaugtaktes ermöglicht eine interne Abgasrückführung, wodurch der Aufwand für eine externe Abgasrückführung zumeist eingespart werden kann.

Die Erfindung wird im Folgenden anhand der Fig. näher erläutert.

In dem in der Fig. dargestellten Diagramm ist der Ventilhub H über der Kurbelstellung KW in Grad Kurbelwinkel für Einlaßventile und Auslaßventile, jeweils für Vollastbetrieb und Teillastbetrieb aufgetragen. Bezugszeichen E_{T} bezeichnet den Ventilhub H der Einlaßventile bei Teillast, E_{V} den Ventilhub der Einlaßventile bei Vollast. Der Ventilhub H der Auslaßventile für Teillast bzw. für Vollast ist mit A_{T} bzw. A_{V} bezeichnet. Deutlich ist zu erkennen, daß bei Teillast die Steuerzeiten der Einlaßventile und der Auslaßventile nach Spät verstellt werden, wobei die Spätverstellung der Einlaßnockenwelle etwa 50° beträgt, so daß der Einlaßschluß bei 90° bis 140° nach dem unteren Totpunkt UT nach dem Ladungswechsel liegt. Die Steuerzeitverstellung des Auslaßventilhubes erfolgt synchron mit der Verstellung des Einlaßventilhubes nach Spät. Durch die Verschiebung der Einlaßsteuerzeit nach Spät wird eine Entdrosselung bewirkt, sodaß während der Ausschiebphase R die überflüssige Luft im Brennraum wieder in das Saugrohr gegen Umgebungsdruck rückgeblasen wird.

Da auch die Auslaßsteuerzeit synchron mit der Einlaßsteuerzeit nach Spät verstellt wird, so-daß der Schließzeitpunkt der Auslaßventile nicht vor dem Öffnungszeitpunkt der Einlaßventile liegt, wird erreicht, daß auch das Ansaugen während der Phase AGR gegen Umgebungsdruck (Abgasdruck) erfolgt. Dadurch treten äußerst geringe Ladungswechselverluste auf. Gleichzeitig erfolgt eine innere Abgasrückführung während der Phase AGR in den Zylinder. Während der Phase AN wird Luft bzw. Gemisch aus dem Einlaßkanal in den Zylinder angesaugt.

Durch das erfindungsgemäße Verfahren ist ein ungedrosselter Betrieb mit äußerst geringem konstruktivem und steuertechnischem Aufwand möglich. Daher ergeben sich äußerst geringe Ladungswechselverluste und ein günstiger Kraftstoffverbrauch. Da zur Steuerzeitverstellung nur eine einzige, für Ein- und Auslaßventile gemeinsame konventionelle Nockenwellen-Phasenverstelleinrichtung verwendet werden kann, ist im Vergleich zu einem vollvariablem Ventilhub und im Vergleich zur Steuerzeitverstellung bei DOHC-Motoren ein wesentlich geringerer Aufwand erforderlich.

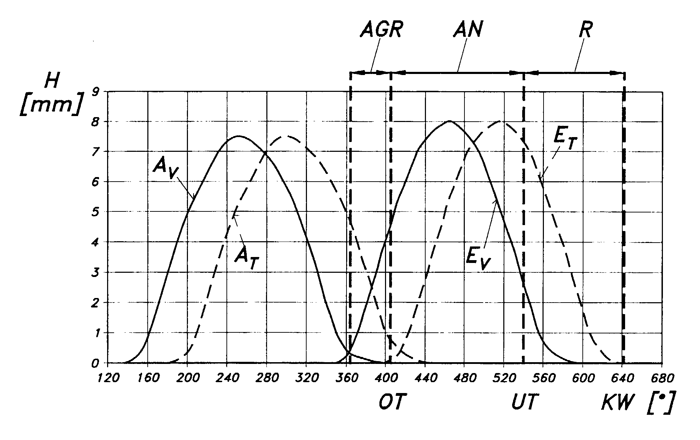

## Patentansprüche

1. Verfahren zum Betreiben einer fremdgezündeten Viertakt-Brennkraftmaschine mit zumindest einem Einlaßventil und zumindest einem Auslaßventil pro Zylinder, wobei Einund Auslaßventile über eine gemeinsame Nockenwelle betätigt werden, **dadurch gekennzeichnet**, daß bei Teillast durch eine Phasenverstellung der Nockenwelle sowohl die Einlaßsteuerzeit als auch die Auslaßsteuerzeit um einen Kurbelwellen-Winkel von etwa 30° bis 100°, vorzugsweise etwa 40° bis 80°, nach Spät verschoben wird.

2. Verfahren nach Anspruch 1, **dadurch gekennzeichnet,** daß bei Spätverstellung der Einlaßsteuerzeit der Einlaßschluß bei etwa 80° bis 150°, vorzugsweise bei etwa 90° bis 140° nach dem auf dem Ladungswechsel folgenden unteren Totpunkt erfolgt.

3. Verfahren nach Anspruch 1 oder 2, **dadurch gekennzeichnet,** daß die Brennkraftmaschine ungedrosselt betrieben wird.

4. Verfahren nach einem der Ansprüche 1 bis 3, **dadurch gekennzeichnet,** daß die Phasenverstellung der Nockenwelle durch Verdrehen und/oder Verschieben der Nockenwelle erfolgt.

5. Verfahren nach einem der Ansprüche 1 bis 4, **dadurch gekennzeichnet,** daß während der Einlaßphase eine asymmetrische Einlaßströmung generiert wird.
